(19) Europäisches Patentamt / European Patent Office / Office européen des brevets

(11) **EP 3 582 455 B1**

(12) **EUROPEAN PATENT SPECIFICATION**

(45) Date of publication and mention
of the grant of the patent:
**22.06.2022 Bulletin 2022/25**

(21) Application number: **18760794.0**

(22) Date of filing: **28.02.2018**

(51) International Patent Classification (IPC):
**H04L 67/00** *(2022.01)*

(52) Cooperative Patent Classification (CPC):
**H04L 1/08; H04L 1/187; H04L 1/1887**

(86) International application number:
**PCT/CN2018/077581**

(87) International publication number:
**WO 2018/157819 (07.09.2018 Gazette 2018/36)**

(54) **METHOD AND APPARATUS FOR MULTIPLE SUBFLOWS NETWORK TRANSMISSION**

VERFAHREN UND VORRICHTUNG ZUR MEHRFACHEN SUBFLÜSSEN-NETZÜBERTRAGUNG

PROCÉDÉ ET APPAREIL POUR UNE TRANSMISSION RÉSEAU À SOUS-FLUX MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2017 CN 201710121110
25.04.2017 CN 201710278562**

(43) Date of publication of application:
**18.12.2019 Bulletin 2019/51**

(73) Proprietor: **Huawei Technologies Co., Ltd.
Longgang District
Shenzhen, Guangdong 518129 (CN)**

(72) Inventors:
• **ZHU, Jianjian
Shenzhen
Guangdong 518129 (CN)**

• **LIU, Wei
Shenzhen
Guangdong 518129 (CN)**
• **ZUO, Jing
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
EP-A1- 2 899 929   CN-A- 101 895 466
CN-A- 104 735 726   CN-A- 104 954 206
US-A1- 2016 134 519   US-B1- 7 733 913

## Description

### TECHNICAL FIELD

The present invention relates to the field of network transmission, and in particular, to a multi-subflow data transmission method and apparatus.

### BACKGROUND

With development of network technologies, in some network scenarios, there are a plurality of transmission links between a transmit end and a receive end of data. For example, a mobile terminal supports both Wi-Fi-based access and LTE-based access, and there are a plurality of physical links between data center servers. A plurality of subflows are correlated and managed, and are concurrently used for aggregated transmission, to improve bandwidth utilization and transmission performance.

For example, the MPTCP is a new transport layer protocol formulated by IETF. According to the MPTCP, a unique meta-sock is used to receive data from an upper-layer application, and the meta-sock schedules and distributes, to sub-socks, managed by the meta-sock, of a plurality of subflows and according to a scheduling algorithm of a data scheduling module, the data delivered by an application layer, to perform transmission. In the existing MPTCP, a scheduling rule of a default scheduling algorithm in a protocol stack is to preferentially schedule data sending in a subflow corresponding to a smallest round trip time (RTT).

Transmission delays of subflows vary. Therefore, data packets sequentially sent by a transmit end in the subflows may arrive at a receive end out of order, and the receive end needs to cache and process the out-of-order data packets. On an actual network, a network connection of a subflow is not always in a stable state. For example, in a TCP connection, at a TCP slow start stage, a data transmission rate of a subflow is limited by a change of a congestion window, and the change of the congestion window approximates to an exponential change model at the slow start stage. In this case, transmission delays of subflows are in a changing state, increasing difficulty in processing out-of-order data packets by a receive end and increasing a quantity of data packets that need to be cached. As a result, efficiency and stability of aggregated transmission are reduced.

US7733913B1 discloses a method and apparatus of striping data by a striping engine in a transmitter over a plurality of transmission channels having limited bandwidths and variable delays.

US2016/134519A1 discloses a method and device of managing feedback messages in a multipath communication network utilised to transmit, between a first communication device and a second communication device.

### SUMMARY

The invention is carried out as described in the appended claims.

### BRIEF DESCRIPTION OF DRAWINGS

FIG. 1 is a schematic diagram of an application scenario according to an embodiment of the present invention;
FIG. 2 is a schematic diagram of modules of an MPTCP network apparatus according to an embodiment of the present invention;
FIG. 3 is a schematic flowchart of a method according to an embodiment of the present invention;
FIG. 4 is a schematic flowchart of another method according to an embodiment of the present invention;
FIG. 5A is a schematic flowchart of a data packet transmission timing according to an embodiment of the present invention;
FIG. 5B is a schematic flowchart of another data packet transmission timing according to an embodiment of the present invention;
FIG. 6 is a schematic flowchart of another method according to an embodiment of the present invention;
FIG. 7 is a schematic flowchart of another method according to an embodiment of the present invention;
FIG. 8 is a schematic diagram of a logical structure of a network apparatus according to an embodiment of the present invention; and
FIG. 9 is a schematic diagram of a hardware structure of a network apparatus according to an embodiment of the present invention.

## DESCRIPTION OF EMBODIMENTS

To make the objectives, technical solutions, and advantages of the present invention clearer, the following further describes the embodiments of the present invention in detail with reference to accompanying drawings.

The Multipath Transmission Control Protocol (MPTCP) is mentioned in the following descriptions. The Multipath Transmission Control Protocol allows data communication, across a plurality of subflows on a network, in a transmission connection between network devices. It should be noted that these descriptions are merely used as an example. Technologies or mechanisms in the described embodiments may be applied to another protocol that allows a plurality of subflows to be simultaneously used in a connection between a plurality of network devices. A "connection" between network devices is a session established by using a preset process (for example, a process defined by the MPTCP, the Transmission Control Protocol (TCP), or another protocol). A connection network between network devices may have one or more intermediate devices, for example, a router, a switch, a firewall, a network address translator, or a proxy. A subflow is a packet flow of a connection (for example, a TCP connection), wherein the packet flow is transmitted on a path. Generally, one subflow is an independent TCP connection. Such connections form an MPTCP connection. A start and an end of a subflow are the same as those of a conventional TCP connection.

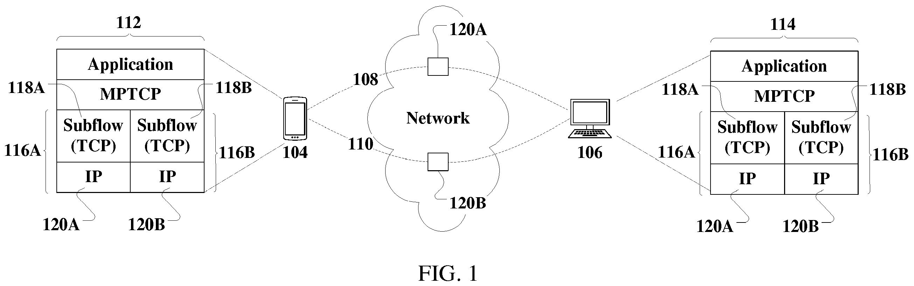

FIG. 1 is a schematic diagram of a scenario in which a network 102 that is connected to a first network device 104 and a second network device 106 is included. Although only the two network devices are described, it should be noted that the network 102 may be connected to an additional network device. An example of a network device includes a personal digital assistant, a mobile phone, a tablet computer, a notebook computer, a desktop computer, an Internet of Things terminal, an intelligent car, a server computer, a storage controller, an electronic device, or another type of electronic network device.

In the example shown in FIG. 1, a plurality of subflows 108 and 110 may be provided in a connection established between the network devices 104 and 106. Although only the two subflows 108 and 110 are shown for the connection between the network devices 104 and 106, it should be noted that a connection between network devices may have more than two subflows. A plurality of connections may be alternatively established for the network devices 104 and 106, and each connection may be correlated with a subflow set corresponding to the connection. In some examples, the first subflow 108 may be a part of a path on a mobile communications network (for example, a cellular network), and the second subflow 110 may be on a wireless local area network. In another example, the subflow 108 or 110 may be a part of a wired path.

As shown in FIG. 1, in a scenario in which the MPTCP is used, each of the network devices 104 and 106 includes corresponding MPTCP stacks 112 and 114. The protocol stack 112 or 114 includes an application layer (including application software) and an MPTCP layer (used to implement an MPTCP function). For each subflow, there is one TCP/IP (Transmission Control Protocol/Internet Protocol) instance 116A or 116B in the protocol stack 112 or 114. It should be noted that there are two TCP/IP instances 116A and 116B because there are two subflows in the example shown in FIG. 1. If there are more subflows for the connection between the network devices 104 and 106, an additional TCP/IP instance is to be provided in the protocol stack 112 or 114.

Each TCP/IP instance 116A or 116B includes a corresponding TCP layer 118A or 118B and a corresponding IP layer 120A or 120B. The MPTCP layer defines connection-level (or data-level) connection-borne communication, and each TCP layer defines subflow-level communication. Although the MPTCP layer and the TCP/IP instance are used to describe each protocol stack 112 or 114, it should be noted that another type of protocol layer may be included depending on a protocol stack of another implementation.

The MPTCP is designed to be backward-compatible with an existing network component. In some cases, the network 102 may include one or more blocking intermediate devices 120A and 120B, also referred to as sequence hole blocking middle boxes. An example of the blocking intermediate device includes a firewall, a network address translator, a proxy (for example, a performance enhancing proxy), or any other intermediate device. The blocking intermediate device is located on a routing path of a packet between a transmitter device and a receiver device; and for example, when the intermediate device detects that a sequence number of a packet received by the intermediate device 120A or 120B becomes discontinuous, prevents forwarding the packet to a destination. In other words, if the blocking intermediate device detects that there is a sequence hole in the packet received by the intermediate device, the blocking intermediate device prevents forwarding, to the destination, a packet whose sequence number is after a lost sequence number or is greater than a lost sequence number. In an alternative implementation, the blocking intermediate device may prevent forwarding a packet if the blocking intermediate device detects another feature in a packet flow coming from the transmitter device. When the blocking intermediate device is located on the routing path of the packet between the transmitter device and the receiver device, the blocking intermediate device is in a path of a subflow.

In the example shown in FIG. 1, the intermediate devices 120A and 120B are provided in the corresponding subflows 108 and 110. In an alternative example, the blocking intermediate device is provided in only one of the subflows 108 and 110. For another example, one or both of the intermediate devices 120A and 120B may be a non-blocking intermediate device (even if there is a sequence hole in a packet, the non-blocking intermediate device also allows the packet to be forwarded to a destination). Assuming that the intermediate device 120A or 120B is a blocking intermediate device, if the blocking intermediate device detects a sequence hole along a corresponding subflow (108 or 110), the blocking intermediate device prevents forwarding a packet along the subflow.

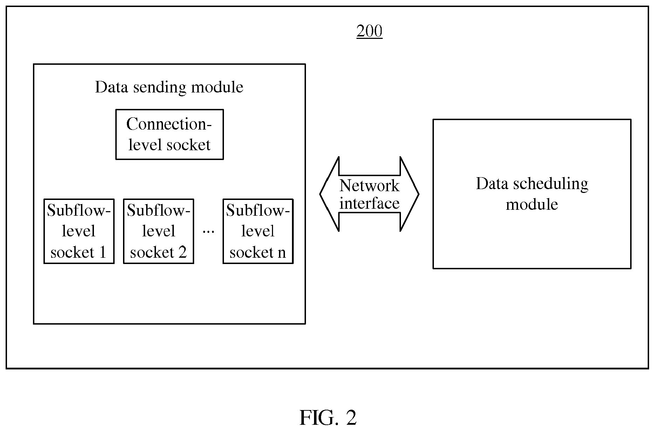

FIG. 2 is a schematic diagram of modules of an MPTCP network device 200 according to an embodiment of the present invention. According to the MPTCP, a unique meta-sock (a connection-level socket) is used to receive data from an upper-layer application, and the meta-sock schedules and distributes, to sub-socks (subflow-level sockets), managed by the meta-sock, of a plurality of subflows and according to a scheduling algorithm of a data scheduling module, the data delivered by an application layer, to perform transmission.

In the following descriptions, for ease of understanding, main concepts included in the embodiments are first explained.

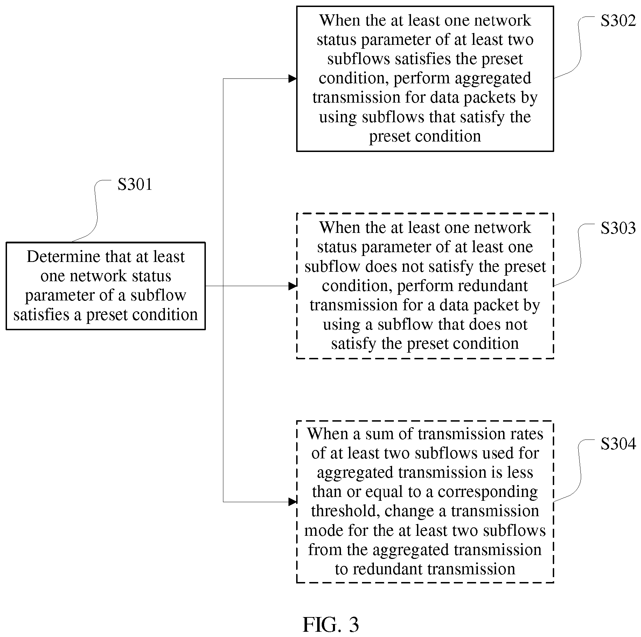

Aggregated transmission: During data transmission, a manner in which one data packet is transmitted by using only one subflow and data packets transmitted in all subflows are different from each other is the aggregated transmission. The aggregated transmission can save network resources, and maximally use bandwidth of each subflow, to improve data transmission efficiency. Based on understanding with reference to the logical modules shown in FIG. 2, the upper-layer application transmits the data to the meta-sock, and the meta-sock stores the data in a write queue. During aggregated transmission, when subflows are used to send data, data is started to be obtained from a location, in the write queue, of data that has not been acknowledged by a receive side and that has not been sent by using any subflow, and then the data is sent. For example, as shown in FIG. 3, data packets 1 to 5 are data sent through aggregated transmission by using a subflow 1 and a subflow 2, and data packets sent by using the subflow 1 and the subflow 2 are different from each other.

Redundant transmission: During data transmission, one data packet may be repeatedly transmitted by each subflow, that is, all the subflows transmit a same data packet. Such a manner is the redundant transmission. The redundant transmission can ensure data reliability, and reduce processing load of a receive end when the receive end receives data. With reference to FIG. 2, the upper-layer application transmits the data to the meta-sock, and the meta-sock stores the data in a write queue. When subflows are used to send data, data is started to be obtained from a location, in the write queue, of data that has not been acknowledged by a receive side and that has not been sent by using any subflow, and then the data is sent. For example, as shown in FIG. 3, data packets 6 to 10 are data sent through redundant transmission by using a subflow 1 and a subflow 2, data packets sent by using the subflow 1 and the subflow 2 are same data packets, and each data packet is sent in both the two subflows.

With reference to FIG. 3, FIG. 3 is a schematic flowchart of a method of a network transmission method embodiment according to the present invention. This embodiment is executed by a transmit end in a network device for which a plurality of subflows are established to transmit data. To be specific, in the example shown in FIG. 1, when the network device 104 sends data to the network device 106, this embodiment is executed by the network device 104; otherwise, when the network device 106 sends data to the network device 104, this embodiment is executed by the network device 106. In this embodiment, a to-be-sent data packet from the transmit end is in a cache queue of to-be-sent data, and a plurality of subflows that can be used to transmit data have been established between the transmit end and a receive end. For transmission of a to-be-sent data packet, this embodiment includes the following steps.

S301. Determine that at least one network status parameter of a subflow satisfies a preset condition.

After a link is successfully established for a subflow, the transmit end monitors at least one preset network status parameter of each subflow, to monitor a network status of each subflow. Based on a preset condition correspondingly set for the monitored network status parameter, it is determined whether the network status of the subflow is stable. When the monitored network status parameter satisfies the preset condition, it is considered that the subflow enters a stable transmission state. The stable transmission state means that a value of a network latency of the subflow is relatively stable or is in a predictable regular change. In the stable transmission state, the transmit end can obtain or predict the network latency of the subflow in a relatively accurate manner. For example, at a TCP slow start stage, a data transmission rate of a subflow is limited by a change of a congestion window, and the change of the congestion window approximates to an exponential change model at the slow start stage. Therefore, in this case, a change of a network latency of the subflow is unstable and difficult to predict, and this stage is not a stable transmission stage. After this, the change of the congestion window of a TCP link approximates to a linear regular increase. In this case, the network latency is at a predictable change stage, and the subflow is at a stable transmission stage.

In an implementation, the transmit end determines whether a subflow is in a stable transmission state depending on whether a link transmission delay difference between a plurality of subflows is less than or equal to a corresponding threshold. The link transmission delay difference is a difference between transmission delays of subflows among subflows used for transmission. When the transmission delay difference is relatively small, the transmission delays of the subflows are relatively close, and a network status is relatively stable.

The transmit end may obtain the link transmission delay difference between the subflows in a same manner. For example, corresponding information may be added to some or all of data packets in the subflows; and the receive end may determine the link transmission delay difference based on the information, and send the obtained link transmission delay difference to the transmit end by using a response packet.

In a implementation, a sending time of some or all of the data packets of the subflows may be added to the data packets in a manner such as using a timestamp. The receive end determines the transmission delays of the subflows by receiving a data packet carrying the sending time, and calculates the link transmission delay difference between the subflows.

In another implementation, an identifier of another data packet transmitted in another subflow and a sending time difference between a data packet and the another data packet are added to the data packet. Therefore, the receive end can determine the sending time difference between the two data packets in two links, and determine, based on a receive time difference between the two data packets, that a difference between the sending time difference and the receive time difference is a link transmission delay difference between the two subflows. For example, an identifier of a data packet B transmitted in a subflow is added to a data packet A in another subflow, where the identifier may directly indicate the data packet B, or the data packet A and the data packet B carry a same identifier, so that the receive end may identify, based on the identifier, the data packet B corresponding to the data packet A. The data packet A further includes a sending time difference M between the data packet A and the data packet B. If M is positive, it indicates that the data packet A is sent after the data packet B; otherwise, the data packet A is sent before the data packet B. After receiving the data packet A, the receive end may determine, based on a receive time Ta of the data packet A and a receive time Tb of the data packet B, that a link transmission delay difference between the two subflows is Tb - Ta - M. When the difference is positive, a transmission delay of a link on which the data packet A is located is less than that of a link on which the data packet A is located; otherwise, a transmission delay of a link on which the data packet A is located is greater than that of a link on which the data packet A is located.

In still another implementation, an identifier of another data packet that is sent simultaneously with a data packet or sent at a preset time interval and that is transmitted in another subflow is added to the data packet. Therefore, the receive end determines a link transmission delay difference between the two subflows based on a receive time difference between the two data packets and the preset sending time interval. A difference between a principle of this implementation and that of the foregoing implementation lies in: A sending time difference between data packets is preset, and the time difference does not need to be included in the data packets, thereby reducing network consumption.

For example, a network status parameter used to determine a stable transmission state and a preset condition corresponding to the network status parameter may be one or more of the following.

a. A real-time transmission rate of a subflow reaches a preset rate.

In a possible implementation, it may be determined whether the real-time transmission rate of the subflow reaches the preset rate. Generally, when the transmission rate of the subflow reaches a specific rate, a network transmission status of the subflow tends to be stable. Therefore, based on a specific network status of the subflow, a corresponding preset rate may be set as a condition for determining a stable transmission state.

In another possible implementation, it may be determined whether the real-time transmission rate of the subflow is kept in a preset range within a preset period of time. When the real-time transmission rate of the subflow is kept in the preset range within the preset period of time, fluctuation of the transmission rate of subflow is relatively small, and it may be considered that a network transmission status of the subflow is stable.

b. A congestion control window of a subflow reaches a preset value.

The congestion control window is a maximum quantity of data packets that can be sent by the transmit end each time under congestion control. The transmit end presets a size value based on a network congestion level, and the value is the congestion window. A size of the congestion window depends on the network congestion level, and changes dynamically. The sender makes a send window of the sender be equal to the congestion window. If a receiving capability of the receiver is further considered, the send window may be alternatively less than the congestion window. Therefore, monitoring the congestion control window of the subflow may be used to determine whether a network transmission status of the subflow is stable.

c. A receive window of the receive end reaches a preset value.

For the receive window, the receiver sets the receive window depending on a receiving capability of the receiver, writes this window value into a window field in a TCP header, and transmits the TCP header to the sender, so that the sender can learn a quantity of receive windows. Similar to the congestion control window, the receive window may also be used to determine whether a network status is stable.

d. A quantity of data packets transmitted by using a subflow reaches a preset value.

The quantity of transmitted data packets is a quantity of data packets that have been successfully transmitted to the receive end and acknowledged by the receive end, or a quantity of bytes of the data packets. Early when a TCP connection is established, a network transmission status of the subflow is usually an unstable state, and after a specific amount of data is transmitted, the subflow enters a stable state. Therefore, based on the quantity of transmitted data packets, it may be determined whether a network status of the subflow is stable.

e. A quantity of data packets transmitted by a subflow that are not acknowledged reaches a preset value.

A transmitted data packet that is not acknowledged is a data packet, in a transmission process, that has not been acknowledged by the receive end. When the quantity of transmitted data packets that are not acknowledged reaches the preset value, it may indicate that a transmission rate reaches a stable value, and a network transmission status is a stable state.

f. Duration after data transmission in a subflow starts reaches a preset value.

As described above, early when a TCP connection is established, a network transmission status of the subflow is usually an unstable state, and after a specific period of time, the subflow enters a stable state. Therefore, it may also be determined, based on the duration after the data transmission starts, whether the subflow enters a stable transmission state.

g. A transmission delay variation is less than or equal to a preset value.

The transmission delay variation is a quantized value indicating that there is a difference between a transmission sequence or a time interval at which a data packet is sent and a transmission sequence or a time interval at which the data packet arrives at the receive end.

h. A packet loss rate is less than or equal to a preset value.

The foregoing network status parameters and preset conditions corresponding to the network status parameters are merely examples. A person skilled in the art may also determine, with reference to the prior art and by using other parameters and conditions used to determine a stable network state, whether a subflow enters a stable transmission state.
S302. When at least one network status parameter of at least two subflows satisfies the preset condition, perform aggregated transmission for data packets by using subflows that satisfy the preset condition.
According to the foregoing network status parameter, if the network status parameter of the at least two subflows satisfies the preset condition, the aggregated transmission is performed for the data packets by using the at least two subflows. In a different implementation, one or more types of network status parameters of all of the at least two subflows may satisfy a preset condition, or different network status parameters of all of the at least two subflows may satisfy a preset condition. Correspondingly, even if determining is performed for all of the at least two subflows based on the one or more types of network status parameters, preset conditions corresponding to the network status parameter of the subflows may vary because the subflows vary. To be specific, it is determined whether the network status parameter satisfies the preset condition, to determine whether the subflow enters a stable transmission state.
With reference to the foregoing descriptions of the aggregated transmission, when the aggregated transmission is performed by using the at least two subflows, data packets are sent by respectively using two subflows non-repeatedly, and the data packets sent by using the subflows are different from each other. The transmit end obtains a to-be-sent data packet from a to-be-sent queue, and allocates the data packet to one of the at least two subflows for sending. After allocation, sending of the data packet is completed, and the data packet is not repeatedly allocated to another subflow. To be specific, when subflows are used to send data, data is started to be obtained from a location, in the to-be-sent queue, of data that has not been acknowledged by the receive side currently and that has not been sent by using any subflow, and then the data is sent. A rule according to which the transmit end allocates data packets to different subflows is not limited in this embodiment.
Optionally, in this embodiment, the following step may be further included.
S303. When the at least one network status parameter of at least one subflow does not satisfy the preset condition, perform redundant transmission for a data packet by using a subflow that does not satisfy the preset condition.
Among a plurality of subflows whose network status parameters are monitored, a subflow whose network status parameter does not satisfy the preset condition is used to transmit data through redundant transmission. All of the plurality of subflows may have a same network status parameter, or may have different network status parameters. A same network status parameter of the plurality of subflows may be corresponding to a same preset condition, or may be corresponding to different preset conditions that are corresponding to the subflows. Referring to the foregoing descriptions, when a network status parameter of a subflow does not satisfy the preset condition, it is considered that the subflow is in an unstable transmission state.

With reference to the foregoing explanations of the redundant transmission, all data packets included in the data are transmitted in each of subflows that are in an unstable transmission state. To be specific, each data packet is redundantly and repeatedly transmitted by using each subflow. The transmit end obtains a to-be-sent data packet from a to-be-sent queue, and allocates the data packet to a subflow whose network status parameter does not satisfy the preset condition, and the data packet is sent by using each subflow. To be specific, when subflows are used to send data, data is started to be obtained from a location, in the to-be-sent data queue, of data that has not been acknowledged by the receive side currently and that has not been sent by a current subflow, and then the data is sent.

Optionally, in this embodiment, the following step may be further included.

S304. When a sum of transmission rates of at least two subflows used for aggregated transmission is less than or equal to a corresponding threshold, change a transmission mode for the at least two subflows from the aggregated transmission to redundant transmission.

After the aggregated transmission is performed by using the subflows whose network status parameter satisfies the preset condition in step S302, a sum of transmission rates of the subflows used for the aggregated transmission, namely, an aggregated transmission rate, is monitored. When the aggregated transmission rate is less than or equal to a corresponding threshold, a subflow in the aggregated transmission may be in an unstable transmission state. Therefore, the transmission mode for the subflows used for the aggregated transmission is changed from the aggregated transmission to the redundant transmission.

According to the method discussed in this embodiment, when the data is transmitted by using the plurality of subflows, the at least one network status parameter of the plurality of subflows is first determined, and when the at least one network status parameter of the at least two of the plurality of subflows satisfies the preset condition, the aggregated transmission is performed for the data packets by using the at least two subflows. Therefore, all the subflows used for the aggregated transmission are subflows in a stable transmission state. This avoids the following case: Because it is difficult to predict a transmission delay of a subflow in an unstable transmission state, the receive end receives a large quantity of out-of-order data packets, and therefore occupies caching space and consumes a processing capability. Efficiency and stability of the aggregated transmission are improved.

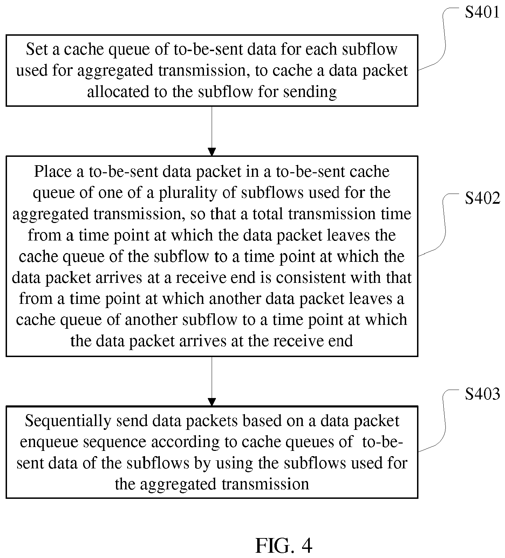

With reference to FIG. 4, FIG. 4 is a schematic flowchart of a method according to another embodiment of the present invention. This embodiment is a further improvement based on the foregoing embodiment. Therefore, to avoid repetition, this embodiment is described with reference to the foregoing embodiment. Related steps in this embodiment may be understood with reference to the descriptions and explanations of the foregoing embodiment.

In this embodiment, with reference to the foregoing embodiment, when step S302 is performed after step S301, the performing aggregated transmission for data packets by using subflows that satisfy the preset condition may be implemented by using the following steps.

S401. Set a cache queue of to-be-sent data (referred to as a "cache queue" for short in the following) for each subflow used for the aggregated transmission, to cache a data packet allocated to the subflow for sending.

One cache queue of to-be-sent data is set for each subflow. When sending a data packet, the transmit end allocates, for sending, the data packet to one of the plurality of subflows used for the aggregated transmission. The data packet enters a cache queue of to-be-sent data of the subflow to which the data packet is allocated. After a data packet, entering the queue before the data packet, in the cache queue of to-be-sent data of the subflow is sent, the data packet is dequeued and sent.

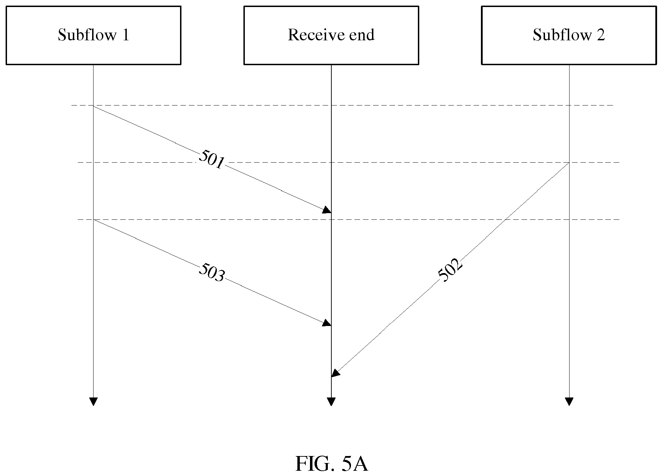

The cache queue is set, so that a time from a time point at which the data packet is allocated to the subflow to a time point at which the data packet arrives at the receive end may be adjusted, and a sequence in which data packets arrive at the receive end is adjusted. As shown in FIG. 5A, in the prior art, for to-be-sent data packets, because RRT of subflows are different, the data packets that are sequentially allocated, for sending, to the subflows by a transmit end arrive at a receive end out of order. For example, in FIG. 5A, data is sent to the receive end by using a subflow 1 and a subflow 2. For sequentially sent data packets 501, 502, and 503, the data packet 501 is first sent by using the subflow 1, then the data packet 502 is sent by using the subflow 2, and finally the data packet 503 is sent by using the subflow 1. However, because an RRT of the subflow 1 is less than an RRT of the subflow 2, the data packets sent by using the subflow 1 arrive at the receive end faster than the data packet sent by using the subflow 2. As a result, the data packets received by the receive end are out of order. To be specific, the data packet 503 is received before the data packet 502.

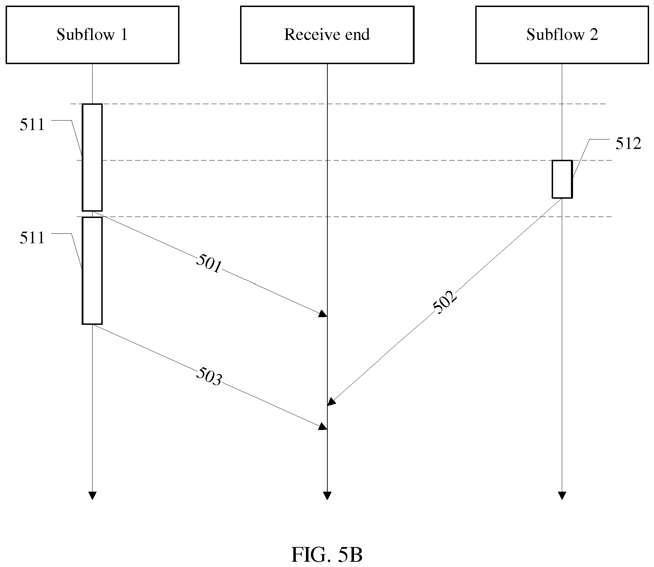

After cache queues are set for subflows, lengths of the cache queues are adjusted, and a cache queue with a longer queue length is set for a subflow with a shorter RRT. This postpones a data packet sending time of the subflow with a shorter RRT, thereby eliminating a time difference caused by an RRT difference, and reducing disorder at the receive end. As shown in FIG. 5B, a cache queue 511 is set for a subflow 1, a cache queue 512 is set for a subflow 2, and a length of the cache queue 511 is greater than that of the cache queue 512. When data packets are sent according to a scenario that is the same as a scenario shown in FIG. 5B, after data packets 501 and 503 are allocated to the subflows, it takes a longer time for dequeuing the data packets 501 and 503 out of the cache queue 511 and sending the data packets to the receive end, thereby eliminating a transmission time difference, caused due to a shorter RRT of the subflow 1, between the subflow 1 and the subflow 2. Therefore, the data packets received at the receive end are still in a correct sequence.

In a possible implementation, during setting of a cache queue, a length of the cache queue may be adjusted through control on a subflow to which a data packet is allocated, so that a length of a cache queue of a subflow with a shorter RRT is greater than a length of a cache queue of a subflow with a longer RRT.

S402. Place a to-be-sent data packet in a cache queue of to-be-sent data of one of a plurality of subflows used for the aggregated transmission, so that a total transmission time from a time point at which the data packet leaves the cache queue of the subflow to a time point at which the data packet arrives at the receive end is consistent with that from a time point at which another data packet leaves a cache queue of another subflow to a time point at which the data packet arrives at the receive end.

After a cache queue is set, a required total time from a time point at which a data packet is allocated to a subflow, that is, enters a cache queue of to-be-sent data of the subflow to which the data packet is allocated, to a time point at which the data packet arrives at the receive end is T. In order that a sequence in which data packets arrive at the receive end is consistent with a sequence in which the data packets are allocated to the subflows, that is, the data packets received by the receive end are not out of order, total times T of the subflows need to be as consistent as possible.

The total time T includes a time T1 from a time point at which the data packet enters the cache queue of to-be-sent data to a time point at which the data packet leaves the queue for sending, and a time T2 in which the data packet is sent by using a subflow. T1 may be obtained by using the following formula (1):

$$T1 = \frac{\text{Total quantity of bytes of a to} - \text{be} - \text{sent cache queue } +}{\text{Quantity of bytes of to} - \text{be} - \text{sent data packets}} \times RRT$$
$$\overline{\text{Quantity of bytes that can be sent in each RRT}}$$

The total quantity of bytes of the cache queue of to-be-sent data is a sum of bytes of data packets in the cache queue of to-be-sent data of the subflow. The quantity of bytes of the to-be-sent data packets is a value of the quantity of bytes of the to-be-sent data packets. The quantity of bytes that can be sent in each RRT is a quantity of bytes that can be sent, by using the subflow, in a current round trip time cycle. The RRT is a time occupied by one round trip time cycle. By using the formula, a time difference between a time point at which the data packet enters the cache queue of to-be-sent data and a time point at which the transmit end sends the data packet can be estimated when the subflow is in a current stable transmission state.

In some scenarios, quantities of bytes in all data packets sent by the transmit end are equal, and the foregoing formula (1) may be converted into the following:

$$T1 = \frac{\text{Quantity of data packets in a to} - \text{be} - \text{sent cache queue } + 1}{\text{Quantity of data packets that can be sent in each RRT}} \times RRT$$

In some scenarios, if the cache queue includes a relatively large quantity of data packets, a quantity of to-be-sent data packets may be ignored, and the formula (1) may be further converted into the following:

$$T1 = \frac{\text{Quantity of data packets in a to} - \text{be} - \text{sent cache queue}}{\text{Quantity of data packets that can be sent in each RRT}} \times RRT$$

It may be understood that T1 may be estimated by using another method in addition to the example provided by the foregoing formula. For example, T1 may be estimated based on an average send rate of monitored subflows and a data amount or a quantity of data packets in a cache queue of to-be-sent data, or a model between a network status of a subflow and a quantity of data packets or a data amount in a cache queue may be established based on historical data, so that the time T1 from a time point at which a current data packet enters the cache queue of to-be-sent data to a time point at which the data packet leaves the queue for sending is determined based on a current network status and the quantity of data packets or the data amount in the cache queue.

The subflow transmission time T2 may be considered as half of an RRT, and in this case, the total time T may be as follows:

$$T = (\frac{\text{Total quantity of bytes of a to} - \text{be} - \text{sent cache queue} + \text{Quantity of bytes of to} - \text{be} - \text{sent data packets}}{\text{Quantity of bytes that can be sent in each RRT}} + 0.5) \times RRT$$

A value of T may be alternatively obtained based on a sum of a variation of the formula (1) and 0.5 RRT. When there is a relatively large difference between a value of T1 and 0.5 RRT, impact of a value of T2 on T may be ignored, and T1 may be used as the total time T.

The total transmission times T of the subflows need to be as consistent as possible. In other words, a difference between the total transmission times T of the subflows needs to be as small as possible. In a implementation, there may be a plurality of implementations. Examples are described as follows.

A. Calculate a current estimated total transmission time T of each subflow, and during allocation of a to-be-sent data packet, always preferentially allocate the data packet to a subflow corresponding to a smallest T value.

To be specific, as described above, the current estimated total transmission time T of each subflow during allocation is determined, and the data packet is preferentially allocated to the subflow corresponding to the smallest T value, so that the total transmission times T of the subflows are as consistent as possible.

B. Determine a difference between RRTs of the subflows; based on the difference between RRTs and a quantity of bytes that can be sent in each RRT of the subflows, determine a difference, that makes T values of the subflows be equal, between quantities of bytes of cache queue of to-be-sent datas of the subflows or quantities of data packets in cache queue of to-be-sent datas of the subflows; and during allocation of a data packet, preferentially select a subflow corresponding to a smallest quantity, obtained by subtracting the difference, of remaining bytes in a cache queue of to-be-sent data or remaining data packets in a cache queue of to-be-sent data.

As described above, because RRTs of the subflows are different, T2 values are different. To make values of the total times T be the same, a difference between T1 values of the subflows needs to be used to cancel a difference between T2 values. Two subflows a and b are used as an example:

$$T1a - T1b = T2b - T2a$$

Values of T1 and T2 are substituted. The difference between the quantities of bytes of cache queue of to-be-sent datas of the subflows or the quantities of data packets in cache queue of to-be-sent datas of the subflows may be determined based on the difference between RRTs and the quantity of bytes that can be sent in each RRT of the subflows.

In addition to the foregoing example, it may be understood that, based on a different method for calculating T1, T2, and the total time T, another method for keeping the total transmission times of the subflows consistent may be further obtained.

S403. Sequentially send data packets based on a data packet enqueue sequence according to cache queue of to-be-sent datas of the subflows by using the subflows used for the aggregated transmission.

In this embodiment, optionally, a length of a cache queue of to-be-sent data may be further controlled. Because a data packet is allocated based on an RRT of a subflow during allocation, a time T1 of the data packet in the cache queue of to-be-sent data is used to balance a difference between network transmission delays T2 that is caused by an RRT difference. However, when the data packet leaves the cache queue of to-be-sent data for sending, an RRT of a subflow when the data packet is allocated to the subflow may have changed. Therefore, the time T1 may be shortened through control on a length of a cache queue of to-be-sent data of each subflow. In other words, a time from a time point at which the data packet is allocated to the subflow to a time point at which the data packet is sent by using the subflow is shortened. This reduces a possible change in the RRT in the period of time.

In an implementation, a threshold corresponding to a length of a cache queue of each subflow may be directly set, to limit the queue length. When a length of a cache queue of to-be-sent data of a subflow is greater than a threshold corresponding to the subflow, no data packet is allocated to the subflow again.

In another implementation, it may be determined whether a length of a cache queue of a subflow satisfies a preset condition, to limit the queue length. Examples are described in the following.

(1) When a relationship between a quantity of bytes of data in a cache queue of to-be-sent data of a subflow and a quantity of bytes of a send window (bytes of send window) of the current subflow satisfies a preset condition, for example, the quantity of bytes in the cache queue of to-be-sent data has reached 90% of the quantity of bytes of the send window of the subflow, no data packet enters the cache queue of the subflow again.

(2) When a relationship between a quantity of bytes of data in a cache queue of to-be-sent data of a subflow and a maximum quantity of allowable bytes in flight (maximum bytes in flight) in the current subflow satisfies a preset condition, for example, the quantity of bytes of the data of the cache queue of to-be-sent data has reached 90% of the maximum quantity of allowable bytes in flight in the current subflow, no data packet enters the cache queue of the subflow again.

The length of the cache queue of to-be-sent data in the following may be a quantity of bytes or a quantity of data packets of the cache queue of to-be-sent data, or another value used to measure a data amount in a cache queue.

Based on this embodiment, when the aggregated transmission is performed by using the subflows, the data packets are allocated, so that total transmission times of the data packets sent by using the subflows are relatively consistent. Therefore, the total transmission times of the data packets sent by using the subflows are relatively consistent. After the data packets are allocated, the data packets arrive at the receive end after a same or similar time, so that the sequence in which the receive end receives the data packets is basically consistent with the sequence in which the transmit end allocates the data packets to the subflows. Therefore, in addition to the technical effect achieved by the foregoing embodiment, in this embodiment, a possibility that the receive end receives out-of-order data packets during the aggregated transmission is further effectively reduced, and data transmission stability and efficiency are improved.

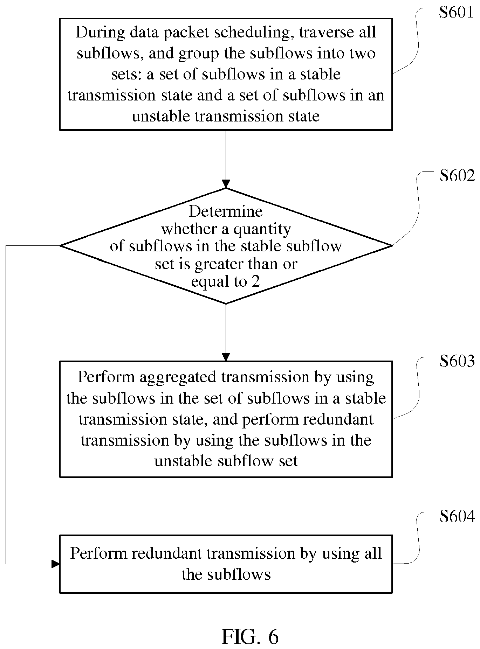

With reference to FIG. 6, FIG. 6 is a schematic flowchart of a method according to another embodiment of the present invention. This embodiment provides a further discussion with reference to the first embodiment or the second embodiment, and mainly discusses about a specific processing procedure implemented when there are a plurality of subflows and only some of the subflows enter a stable transmission state. Therefore, this embodiment may be understood with reference to the foregoing two embodiments. In the foregoing two embodiments, there are already related discussions about how to determine whether a subflow enters a stable transmission state and how to perform redundant transmission or aggregated transmission. Details are not described in this embodiment again.

When there are more than two subflow links, based on the first embodiment, processing is performed by using the following steps.

S601. During data packet scheduling, traverse all subflows, and group the subflows into two sets: a set of subflows in a stable transmission state and a set of subflows in an unstable transmission state, where a grouping condition is the same as the condition described in the foregoing embodiments.

S602. Determine whether a quantity of subflows in the stable subflow set is greater than or equal to 2.

S603. When the quantity of subflows in the stable subflow set is greater than or equal to 2, perform aggregated transmission by using the subflows in the set of subflows in a stable transmission state, and perform redundant transmission by using the subflows in the unstable subflow set.

S604. When the quantity of subflows in the stable subflow set is less than 2, perform redundant transmission by using all the subflows.

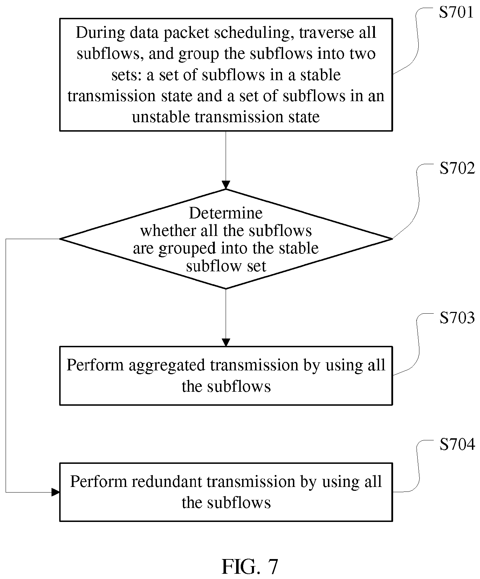

With reference to FIG. 7, FIG. 7 is a schematic flowchart of a method according to another embodiment of the present invention. Similar to the embodiment corresponding to FIG. 6, this embodiment provides a further discussion with reference to the first embodiment or the second embodiment, and mainly discusses about a specific processing procedure implemented when there are a plurality of subflows and only some of the subflows enter a stable transmission state. Therefore, this embodiment may be understood with reference to the foregoing two embodiments. In the foregoing two embodiments, there are already related discussions about how to determine whether a subflow enters a stable transmission state and how to perform redundant transmission or aggregated transmission. Details are not described in this embodiment again. This embodiment includes the following steps.

S701. During data packet scheduling, traverse all subflows, and group the subflows into two sets: a set of subflows in a stable transmission state and a set of subflows in an unstable transmission state, where a grouping condition is the same as the condition described in the foregoing embodiments.

S702. Determine whether all the subflows are grouped into the stable subflow set.

S703. When all the subflows are grouped into the stable subflow set, perform aggregated transmission by using all the subflows.

S704. When not all the subflows are grouped into the stable subflow set, perform redundant transmission by using all the subflows.

The foregoing two embodiments provide an example data packet scheduling method in a case in which there are a plurality of subflows. The stable subflow set and the unstable subflow set are set, and therefore, subflows in different transmission states are scheduled in different manners. This improves resource utilization of the subflows on a basis of ensuring transmission efficiency and transmission stability.

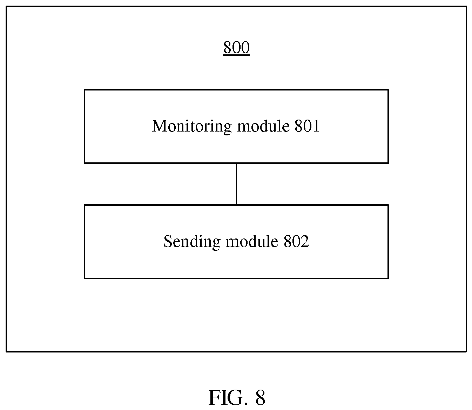

With reference to FIG. 8, FIG. 8 is a logical structural diagram of an embodiment of a network device 800 according to the present invention. Based on invention ideas of the foregoing method embodiments, this embodiment provides a network device including function modules that can implement the foregoing method. The network device includes:

a monitoring module 801, configured to determine at least one network status parameter of a plurality of subflows, where the monitoring module 801 may be configured to perform step S301 in the foregoing embodiment; and

a sending module 802, configured to: when at least one network status parameter of at least two of the plurality of subflows satisfies a preset condition, perform aggregated transmission for data by using the at least two subflows, where referring to the foregoing method embodiment, the sending module 802 may be configured to perform step S302 in the foregoing embodiment.

Optionally, the sending module 802 may be further configured to perform steps S303, S304, S401, S402, and S403 in the foregoing methods.

Optionally, with reference to the embodiments corresponding to FIG. 6 and FIG. 7, the sending module 702 may perform sending according to steps S601 to S604 or steps S701 to S704 by using the plurality of subflows b and by using the network status parameter obtained by the monitoring module.

With reference to the schematic diagram, corresponding to FIG. 2, of the network apparatus for MPTCP transmission, the sending module in this embodiment may be implemented by using a data scheduling module and a data sending module in FIG. 2.

The module division in the embodiments of this application is an example, is merely logical function division, and may be other division in actual implementation. In addition, function modules in the embodiments of this application may be integrated into one piece of physical hardware, or each of the modules may exist as independent physical hardware, or at least two modules may be integrated into one module. The integrated module may be implemented in a form of hardware, or may be implemented in a form of a software function module.

According to the network device provided in this embodiment, when the network device sends data by using a plurality of subflows, the technical effect of the foregoing embodiments can be achieved.

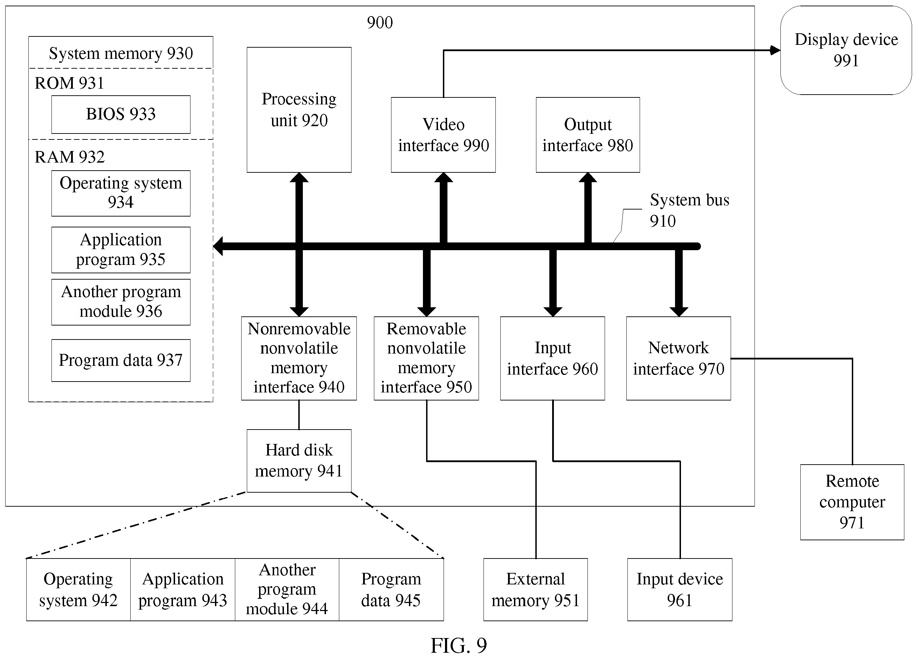

Referring to FIG. 9, an example system for implementing the present invention includes a universal computing device in a form of a network device 900. With reference to the system scenario and architecture shown in FIG. 1, the network device in this embodiment may be an execution body of the embodiment of the present invention that is described by using the foregoing scenario and architecture.

Components of the network device 900 may include but is not limited to: a processing unit 920, a system memory 930, and a system bus 910. The system bus couples various system components including the system memory to the processing unit 920. The system bus 910 may be any one of several types of bus structures. Such buses may include a memory bus or a memory controller, a peripheral bus, and a local bus in one bus structure. The bus structures may include an industrial standard architecture (ISA) bus, a micro channel architecture (MCA) bus, an extended ISA (EISA) bus, a Video Electronics Standards Association (VESA) local area bus, and a peripheral component interconnect (PCI) bus.

The network device 900 usually includes a plurality of network device-readable media. The network device-readable media may be any medium that can be effectively accessed by the network device 900, and include a volatile or nonvolatile medium and a removable or nonremovable medium. For example, but not as a limitation, the network device-readable media may include a network device storage medium and a communications medium. The network device storage medium includes volatile, nonvolatile, removable, and nonremovable media. These media may be implemented by using any method or technology for storing information such as a network device-readable instruction, a data structure, a program module, or other data. The network device storage medium includes but is not limited to: a RAM, a ROM, an EEPROM, a flash memory or another memory, a hard disk storage, a solid-state disk storage, an optical disc storage, a magnetic disk cartridge, a magnetic disk storage or another storage device, or any other medium that can store required information and that can be accessed by the network device 900. The communications medium usually includes an embedded computer-readable instruction, a data structure, a program module, or other data in a modular data signal (for example, a carrier or another transmission mechanism), and further includes any information transfer medium. Any combinations thereof should also be included in a range of the network device-readable media.

The system memory 930 includes the network device storage medium, and may be a volatile memory and a nonvolatile memory, for example, a read-only memory (ROM) 931 and a random access memory (RAM) 932. A basic input/output system (BIOS) 933 is usually stored in the ROM 931, includes a basic routine program, and helps with information transmission between the components of the network device 900. The RAM 932 usually includes data and/or a program module, and may be instantly accessed and/or immediately operated by the processing unit 920. For example, but not as a limitation, FIG. 9 shows an operating system 934, an application program 935, another program module 936, and program data 937.

The network device 900 may also include another removable or nonremovable and volatile or nonvolatile network device storage medium. Merely used as an example, FIG. 9 shows a hard disk memory 941 that may be a nonremovable and nonvolatile read/write magnetic medium, and an external memory 951 that may be any removable and nonvolatile external memory, for example, an optical disc, a magnetic disk, a flash memory, or a removable hard disk. The hard disk memory 941 is usually connected to the system bus 910 by using a nonremovable storage interface (for example, an interface 940), and the external memory is usually connected to the system bus 910 by using a removable storage interface (for example, an interface 960).

The drives and the network device storage medium related to the drives that are discussed above and shown in FIG. 9 provide storage for a network device-readable instruction, a data structure, a program module, and other data of the network device 900. For example, as described, the hard disk drive 941 is configured to store an operating system 942, an application program 943, another program module 944, and program data 945. It should be noted that these components may be the same as or may be different from the operating system 934, the application program 935, the another program module 936, and the program data 937.

In this embodiment, the methods in the foregoing embodiments or functions of the logical modules in the foregoing embodiment may be implemented by using code or a readable instruction stored in the network device storage medium, and the method may be executed by the processing unit 920 by reading the code or the readable instruction.

A user may use various types of input devices 961 to input a command and information to the network device 900. The various input devices are usually connected to the processing unit 920 by using the user input interface 960. The user input interface 960 is coupled with the system bus, or may be connected to a bus structure by using another interface, for example, a parallel interface or a Universal Serial Bus (USB) interface. A display device 990 may also be connected to the system bus 910 by using an interface. In addition, for example, a computing device 900 may also include various peripheral output devices 920, and the output devices may be connected by using, for example, an output interface 980.

The network device 900 may be connected to one or more computing devices, such as a remote computer 971, by using a network interface 970. A remote computing node includes a network device, a computing node, a server, a router, a network PC, an equivalent device, or another universal network node; and usually includes many or all of the components related to the network device 900 that are discussed above. With reference to the architecture shown in FIG. 1, the remote computing node may be a secondary node, a computing node, or another network device. The logical connection shown in FIG. 9 includes a local area network (LAN) and a wide area network (WAN), or may include another network. The network interface 970 may establish a plurality of TCP connections to the remote computer 971, to perform multi-subflow network data transmission. With reference to the foregoing embodiments, during network data transmission, the network interface 970 may determine, by using the foregoing method and based on a network transmission status of links of a plurality of subflows, whether to perform redundant transmission or aggregated transmission by using the plurality of subflows, to improve network transmission stability and transmission efficiency.

It may be understood that the embodiment corresponding to FIG. 9 may be a network device, in a universal computer architecture, that can be applied to network transmission performed by using a plurality of subflows. However, based on understanding of the functions of the logical modules described in the present invention, the functions described in the present invention may be also implemented by a network device in another hardware architecture. For example, a device that performs network transmission through a wireless network by using an intelligent mobile device may establish a plurality of links through a cellular network, and determine a network transmission status of subflows by using a network transmission module, to perform redundant transmission or aggregated transmission.

A person skilled in the art should be aware that in the foregoing examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of the present invention are further described in detail in the foregoing specific embodiments. It should be understood that the foregoing descriptions are merely specific embodiments of the present invention, but are not intended to limit the protection scope of the present invention.

**Claims**

1. A network transmission method, wherein the method is used to transmit data by using a plurality of subflows, and the method comprises:

    determining at least one network status parameter of the plurality of subflows; and
    when at least one network status parameter of at least two of the plurality of subflows satisfies a preset condition, performing aggregated transmission for the data by using the at least two subflows, wherein the aggregated transmission means that one data packet is sent by using only one of the at least two subflows, and data packets sent by using different subflows of the at least two subflows are different from each other; and

when a sum of transmission rates of the aggregated transmission is less than or equal to a corresponding threshold, performing redundant transmission for the data separately by using the at least two subflows, wherein the redundant transmission means that data packets are sent by using all of the at least two subflows, and the data packets sent by using all of the at least two subflows are the same.

**2.** The method according to claim 1, wherein the method further comprises: when the at least one network status parameter of two or more of the plurality of subflows does not satisfy the preset condition, performing redundant transmission for the data separately by using the two or more subflow, wherein the redundant transmission means that data packets are sent by using all of the two or more subflows, and the data packets sent by using all of the two or more subflows are the same.

**3.** The method according to any one of claims 1 to 2, wherein the network status parameter comprises: a real-time transmission rate, a congestion control window, a receive window, a quantity of transmitted data packets, a quantity of transmitted data packets that are not acknowledged, a transmission time, a transmission delay variation, a packet loss rate, or a link transmission delay difference between the at least two subflows.

**4.** The method according to claim 3, wherein when the network status parameter comprises the link transmission delay difference between the at least two subflows, the preset condition is specifically: the link transmission delay difference between the at least two subflows is less than or equal to a corresponding threshold; the data packet comprises a first data packet, wherein the first data packet comprises a sending time of the first data packet, or the first data packet comprises an identifier of a second data packet and a sending time difference between the first data packet and the second data packet, the second data packet is a data packet sent by using a subflow in the at least two subflows that is different from a subflow in the at least two subflows that is used to send the first data packet; or the first data packet comprises an identifier of a third data packet, and the third data packet is a data packet sent simultaneously with the first data packet or sent at a preset time interval and sent by using a subflow in the at least two subflows that is different from a subflow in the at least two subflows that is used to send the first data packet; and the method further comprises: obtaining a response packet, wherein the response packet comprises the link transmission delay difference between the at least two subflows that is calculated based on the first data packet.

**5.** The method according to claim 1, wherein the performing aggregated transmission for the data by using the at least two subflows specifically comprises:
placing a data packet of the data in a cache queue of to-be-sent data of one of the at least two subflows, wherein in the at least two subflows, a data amount in a cache queue of to-be-sent data of a subflow corresponding to a larger transmission delay is less than a data amount in a cache queue of to-be-sent data of a subflow corresponding to a smaller transmission delay.

**6.** The method according to claim 1, wherein the placing a data packet of the data in a cache queue of to-be-sent data of one of the at least two subflows specifically comprises:
placing the data packet of the data in a subflow in the at least two subflows that is corresponding to a shortest estimated total transmission time, wherein the estimated total transmission time is an estimated time from a time point at which the data packet enters the cache queue of to-be-sent data to a time point at which the data packet arrives at a receive end.

**7.** A network transmission apparatus, wherein the apparatus is configured to transmit data by using a plurality of subflows, and the apparatus comprises:

a monitoring module, configured to determine at least one network status parameter of the plurality of subflows; and
a sending module, configured to: when at least one network status parameter of at least two of the plurality of subflows satisfies a preset condition, perform aggregated transmission for the data by using the at least two subflows, wherein the aggregated transmission means that one data packet is sent by using only one of the at least two subflows, and data packets sent by using different subflows of the at least two subflows are different from each other; and
when a sum of transmission rates of the aggregated transmission is less than or equal to a corresponding threshold, perform redundant transmission for the data separately by using the at least two subflows, wherein the redundant transmission means that data packets are sent by using all of the at least two subflows, and the data packets sent by using all of the at least two subflows are the same.

8. The apparatus according to claim 7, wherein the sending module is further configured to: when the at least one network status parameter of two or more of the plurality of subflows does not satisfy the preset condition, performing redundant transmission for the data separately by using the two or more subflow, wherein the redundant transmission means that data packets are sent by using all of the two or more subflow, and the data packets sent by using all of the two or more subflow are the same.

9. The apparatus according to any one of claims 7 to 8, wherein the network status parameter comprises: a real-time transmission rate, a congestion control window, a receive window, a quantity of transmitted data packets, a quantity of transmitted data packets that are not acknowledged, a transmission time, a transmission delay variation, a packet loss rate, or a link transmission delay difference between the at least two subflows.

10. The apparatus according to claim 7, wherein when performing the aggregated transmission for the data by using the at least two subflows, the sending module is specifically configured to: place a data packet of the data in a cache queue of to-be-sent data of one of the at least two subflows, wherein in the at least two subflows, a data amount in a cache queue of to-be-sent data of a subflow corresponding to a larger transmission delay is less than a data amount in a cache queue of to-be-sent data of a subflow corresponding to a smaller transmission delay.

11. A power device, comprising: a processor, a transceiver, and
a memory coupled to the processor and configured to store a plurality of instructions that, when executed, causes the processor to perform the method according to any one of claims 1 to 6.

12. A computer program product comprising instructions which, when executed by a computer, cause the computer to carry out the steps of the method of any one of claims 1 to 6.

13. A non-transitory computer-readable medium storing computer instructions for data transmission, that when executed by one or more processors, cause the one or more processors to perform the method of claim 1 to 6.

**Patentansprüche**

1. Netzwerkübertragungsverfahren, wobei das Verfahren verwendet wird, um Daten durch Verwenden mehrerer Subflows zu übertragen und das Verfahren Folgendes umfasst:

Bestimmen wenigstens eines Netzwerkstatusparameters der mehreren Subflows; und
wenn wenigstens ein Netzwerkstatusparameter von wenigstens zwei der mehreren Subflows eine voreingestellte Bedingung erfüllt, Durchführen einer aggregierten Übertragung für die Daten durch Verwenden der wenigstens zwei Subflows, wobei die aggregierte Übertragung bedeutet, dass ein Datenpaket durch Verwenden nur eines der wenigstens zwei Subflows gesendet wird und Datenpakete, die durch Verwenden unterschiedlicher Subflows der wenigstens zwei Subflows gesendet werden, sich voneinander unterscheiden; und
wenn eine Summe von Übertragungsraten der aggregierten Übertragung geringer als oder gleich einer entsprechenden Schwelle ist, separates Durchführen einer redundanten Übertragung für die Daten durch Verwenden der wenigstens zwei Subflows, wobei die redundante Übertragung bedeutet, dass Datenpakete durch Verwenden von allen der wenigstens zwei Subflows gesendet werden und die Datenpakete, die durch Verwenden von allen der wenigstens zwei Subflows gesendet werden, gleich sind.

2. Verfahren nach Anspruch 1, wobei das Verfahren ferner Folgendes umfasst: wenn der wenigstens eine Netzwerkstatusparameter von zwei oder mehr der mehreren Subflows die voreingestellte Bedingung nicht erfüllt, separates Durchführen der redundanten Übertragung für die Daten durch Verwenden der zwei oder mehr Subflows, wobei die redundante Übertragung bedeutet, dass Datenpakete durch Verwenden aller der zwei oder mehr Subflows gesendet werden, und die Datenpakete, die durch Verwenden von allen der zwei oder mehr Subflows gesendet werden, gleich sind.

3. Verfahren nach einem der Ansprüche 1 bis 2, wobei der Netzwerkstatusparameter Folgendes umfasst: eine Echtzeitübertragungsrate, ein Überlastungssteuerungsfenster, ein Empfangsfenster, eine Menge von übertragenen Datenpaketen, eine Menge von übertragenen Datenpaketen, die nicht bestätigt sind, eine Übertragungszeit, eine Übertragungsverzögerungsvariation, eine Paketverlustrate oder eine Verbindungsübertragungsverzögerungsdifferenz zwischen den wenigstens zwei Subflows.

4. Verfahren nach Anspruch 3, wobei, wenn der Netzwerkstatusparameter die Verbindungsübertragungsverzögerungsdifferenz zwischen den wenigstens zwei Subflows umfasst, die voreingestellte Bedingung speziell wie folgt ist: die Verbindungsübertragungsverzögerungsdifferenz zwischen den wenigstens zwei Subflows ist geringer als oder gleich einer entsprechenden Schwelle; wobei das Datenpaket ein erstes Datenpaket umfasst, wobei das erste Datenpaket eine Sendezeit des ersten Datenpakets umfasst oder das erste Datenpaket einen Bezeichner eines zweiten Datenpakets und eine Sendezeitdifferenz zwischen dem ersten Datenpaket und dem zweiten Datenpaket umfasst, wobei das zweite Datenpaket ein Datenpaket ist, das durch Verwenden eines Subflows in den wenigstens zwei Subflows gesendet wird, der sich von einem Subflow in den wenigstens zwei Subflows unterscheidet, der verwendet wird, um das erste Datenpaket zu senden; oder das erste Datenpaket einen Bezeichner eines dritten Datenpakets umfasst und das dritte Datenpaket ein Datenpaket ist, das mit dem ersten Datenpaket gleichzeitig gesendet wird oder in einem voreingestellten Zeitintervall gesendet wird und durch Verwenden eines Subflows in den wenigstens zwei Subflows gesendet wird, der sich von einem Subflow in den wenigstens zwei Subflows unterscheidet, der verwendet wird, um das erste Datenpaket zu senden; und wobei das Verfahren ferner Folgendes umfasst: Erhalten eines Antwortpakets, wobei das Antwortpaket die Verbindungsübertragungsverzögerungsdifferenz zwischen den wenigstens zwei Subflows, die basierend auf dem ersten Datenpaket berechnet wird, umfasst.

5. Verfahren nach Anspruch 1, wobei das Durchführen der aggregierten Übertragung für die Daten durch Verwenden der wenigstens zwei Subflows speziell Folgendes umfasst:
Platzieren eines Datenpakets der Daten in einer Cache-Warteschlange von zu sendenden Daten von einem der wenigstens zwei Subflows, wobei in den wenigstens zwei Subflows eine Datenanzahl in einer Cache-Warteschlange von zu sendenden Daten von einem Subflow, der einer größeren Übertragungsverzögerung entspricht, geringer als eine Datenanzahl in einer Cache-Warteschlange von zu sendenden Daten eines Subflows ist, der einer kleineren Übertragungsverzögerung entspricht.

6. Verfahren nach Anspruch 1, wobei das Platzieren eines Datenpakets der Daten in einer Cache-Warteschlange von zu sendenden Daten eines der wenigstens zwei Subflows speziell Folgendes umfasst:
Platzieren des Datenpakets der Daten in einem Subflow in den wenigstens zwei Subflows, der einer kürzesten geschätzten Gesamtübertragungszeit entspricht, wobei die geschätzte Gesamtübertragungszeit eine geschätzte Zeit ab einem Zeitpunkt, zu dem das Datenpaket in die Cache-Warteschlange von zu sendenden Daten eintritt, bis zu einem Zeitpunkt ist, zu dem das Datenpaket an einem Empfangsende ankommt.

7. Netzwerkübertragungseinrichtung, wobei die Einrichtung konfiguriert ist, um Daten durch Verwenden mehrerer Subflows zu übertragen, und wobei die Einrichtung Folgendes umfasst:

ein Überwachungsmodul, das konfiguriert ist, um wenigstens einen Netzwerkstatusparameter der mehreren Subflows zu bestimmen; und
ein Sendemodul, das für Folgendes konfiguriert ist: wenn wenigstens ein Netzwerkstatusparameter von wenigstens zwei der mehreren Subflows eine voreingestellte Bedingung erfüllt, Durchführen der aggregierten Übertragung für die Daten durch Verwenden der wenigstens zwei Subflows, wobei die aggregierte Übertragung bedeutet, dass ein Datenpaket durch Verwenden nur eines der wenigstens zwei Subflows gesendet wird, und Datenpakete, die durch Verwenden unterschiedlicher Subflows der wenigstens zwei Subflows gesendet werden, sich voneinander unterscheiden; und
wenn eine Summe von Übertragungsraten der aggregierten Übertragung geringer als oder gleich einer entsprechenden Schwelle ist, separates Durchführen der redundanten Übertragung für die Daten durch Verwenden der wenigstens zwei Subflows, wobei die redundante Übertragung bedeutet, dass Datenpakete durch Verwenden von allen der wenigstens zwei Subflows gesendet werden und die Datenpakete, die durch Verwenden von allen der wenigstens zwei Subflows gesendet werden, gleich sind.

8. Einrichtung nach Anspruch 7, wobei das Sendemodul ferner zu Folgendem konfiguriert ist: wenn der wenigstens eine Netzwerkstatusparameter von zwei oder mehr der mehreren Subflows die voreingestellte Bedingung nicht erfüllt, separates Durchführen der redundanten Übertragung für die Daten durch Verwenden der zwei oder mehr Subflows, wobei die redundante Übertragung bedeutet, dass Datenpakete durch Verwenden von allen der zwei oder mehr Subflows gesendet werden, und die Datenpakete, die durch Verwenden von allen der zwei oder mehr Subflows gesendet werden, gleich sind.

9. Einrichtung nach einem der Ansprüche 7 bis 8, wobei der Netzwerkstatusparameter Folgendes umfasst: eine Echtzeitübertragungsrate, ein Überlastungssteuerungsfenster, ein Empfangsfenster, eine Menge von übertragenen Datenpaketen, eine Menge von übertragenen Datenpaketen, die nicht bestätigt sind, eine Übertragungszeit, eine Übertragungsverzögerungsvariation, eine Paketverlustrate oder eine Verbindungsübertragungsverzögerungsdifferenz zwischen den wenigstens zwei Subflows.

10. Einrichtung nach Anspruch 7, wobei, wenn die aggregierte Übertragung für die Daten durch Verwenden der wenigstens zwei Subflows durchgeführt wird, das Sendemodul speziell für Folgendes konfiguriert ist: Platzieren eines Datenpakets der Daten in eine Cache-Warteschlange der zu sendender Daten von einem der wenigstens zwei Subflows, wobei in den wenigstens zwei Subflows eine Datenanzahl in einer Cache-Warteschlange von zu sendenden Daten eines Subflows, der einer größeren Übertragungsverzögerung entspricht, geringer als eine Datenanzahl in einer Cache-Warteschlange von zu sendenden Daten eines Subflows ist, der einer kleineren Übertragungsverzögerung entspricht.

11. Leistungsvorrichtung, die Folgendes umfasst: einen Prozessor, einen Sendeempfänger und
ein Memory, das mit dem Prozessor gekoppelt ist und konfiguriert ist, um mehrere Anweisungen zu speichern, die, wenn sie ausgeführt werden, den Prozessor veranlassen, das Verfahren nach einem der Ansprüche 1 bis 6 durchzuführen.

12. Computerprogramm, das Anweisungen umfasst, die, wenn sie durch einen Computer ausgeführt werden, den Computer veranlassen, die Schritte des Verfahrens nach einem der Ansprüche 1 bis 6 vorzunehmen.

13. Nicht flüchtiges computerlesbares Medium, das Computeranweisungen für die Datenübertragung speichert, die wenn sie durch einen oder mehrere Prozessoren ausgeführt werden, den einen oder die mehreren Prozessoren veranlassen, das Verfahren der Ansprüche 1 bis 6 durchzuführen.

## Revendications

1. Procédé de transmission en réseau, le procédé étant utilisé pour transmettre des données à l'aide d'une pluralité de sous-flux, et le procédé comprenant :

   la détermination d'au moins un paramètre d'état de réseau de la pluralité de sous-flux ; et
   lorsqu'au moins un paramètre d'état de réseau d'au moins deux de la pluralité de sous-flux satisfait une condition prédéfinie, la réalisation d'une transmission agrégée pour les données à l'aide des au moins deux sous-flux, la transmission agrégée signifiant qu'un paquet de données est envoyé à l'aide d'un seul des au moins deux sous-flux, et que les paquets de données envoyés à l'aide de différents sous-flux des au moins deux sous-flux sont différents l'un de l'autre ; et
   lorsqu'une somme des débits de transmission de la transmission agrégée est inférieure ou égale à un seuil correspondant, la réalisation d'une transmission redondante pour les données séparément à l'aide des au moins deux sous-flux, la transmission redondante signifiant que les paquets de données sont envoyés à l'aide de tous les au moins deux sous-flux et que les paquets de données envoyés à l'aide de tous les au moins deux sous-flux sont les mêmes.

2. Procédé selon la revendication 1, le procédé comprenant en outre : lorsque l'au moins un paramètre d'état de réseau parmi deux ou plus de la pluralité de sous-flux ne satisfait pas la condition prédéfinie, la réalisation d'une transmission redondante pour les données séparément à l'aide des deux sous-flux ou plus, la transmission redondante signifiant que les paquets de données sont envoyés à l'aide de tous les deux sous-flux ou plus, et que les paquets de données envoyés à l'aide de tous les deux sous-flux ou plus sont les mêmes.

3. Procédé selon l'une quelconque des revendications 1 à 2, le paramètre d'état de réseau comprenant : un débit de transmission en temps réel, une fenêtre de commande d'encombrement, une fenêtre de réception, une quantité de paquets de données transmis, une quantité de paquets de données transmis qui sont sans accusé de réception, un temps de transmission, une variation de retard de transmission, un taux de perte de paquets ou une différence de retard de transmission de liaison entre les au moins deux sous-flux.

4. Procédé selon la revendication 3, lorsque le paramètre d'état de réseau comprend la différence de retard de transmission de liaison entre les au moins deux sous-flux, la condition prédéfinie étant spécifiquement : la différence de retard de transmission de liaison entre les au moins deux sous-flux est inférieure ou égale à un seuil correspondant ;
   le paquet de données comprend un premier paquet de données, le premier paquet de données comprenant un temps d'envoi du premier paquet de données, ou le premier paquet de données comprenant un identifiant d'un deuxième paquet de données et une différence de temps d'envoi entre le premier paquet de données et le deuxième paquet de données, le deuxième paquet de données est un paquet de données envoyé à l'aide d'un sous-flux dans les au moins deux sous-flux qui est différent d'un sous-flux dans les au moins deux sous-flux qui est utilisé pour envoyer le premier paquet de données ; ou le premier paquet de données comprend un identifiant d'un troisième paquet de données, et le troisième paquet de données est un paquet de données envoyé simultanément avec le premier paquet de données ou envoyé à un intervalle de temps prédéfini et envoyé à l'aide d'un sous-flux dans les au moins deux sous-flux qui est différent d'un sous-flux dans les au moins deux sous-flux qui est utilisé pour envoyer le premier paquet de données ; et
le procédé comprenant en outre : l'obtention d'un paquet de réponses, le paquet de réponses comprenant la différence de retard de transmission de liaison entre les au moins deux sous-flux qui est calculée sur la base du premier paquet de données.

5. Procédé selon la revendication 1, la réalisation d'une transmission agrégée pour les données à l'aide des au moins deux sous-flux comprenant spécifiquement :
le placement d'un paquet de données des données dans une file d'attente de cache de données à envoyer de l'un des au moins deux sous-flux, dans les au moins deux sous-flux, une quantité de données dans une file d'attente de cache de données à envoyer d'un sous-flux correspondant à un retard de transmission plus grand étant inférieure à une quantité de données dans une file d'attente de cache de données à envoyer d'un sous-flux correspondant à un retard de transmission plus petit.

6. Procédé selon la revendication 1, le placement d'un paquet de données des données dans une file d'attente de cache de données à envoyer de l'un des au moins deux sous-flux comprenant spécifiquement :
le placement du paquet de données des données dans un sous-flux dans les au moins deux sous-flux qui correspond à un temps de transmission total estimé le plus court, le temps de transmission total estimé étant un temps estimé à partir d'un point temporel auquel le paquet de données entre dans la file d'attente de cache des données à envoyer à un point temporel auquel le paquet de données arrive à une extrémité de réception.

7. Appareil de transmission en réseau, l'appareil étant configuré pour transmettre des données à l'aide d'une pluralité de sous-flux, et l'appareil comprenant :

un module de surveillance, configuré pour déterminer au moins un paramètre d'état de réseau de la pluralité de sous-flux ; et
un module d'envoi, configuré pour : lorsqu'au moins un paramètre d'état de réseau d'au moins deux de la pluralité de sous-flux satisfait une condition prédéfinie, réaliser une transmission agrégée pour les données à l'aide des au moins deux sous-flux, la transmission agrégée signifiant qu'un paquet de données est envoyé à l'aide d'un seul des au moins deux sous-flux, et que les paquets de données envoyés à l'aide de différents sous-flux des au moins deux sous-flux sont différents l'un de l'autre ; et
lorsqu'une somme des débits de transmission de la transmission agrégée est inférieure ou égale à un seuil correspondant, réaliser une transmission redondante pour les données séparément à l'aide des au moins deux sous-flux, la transmission redondante signifiant que les paquets de données sont envoyés à l'aide de tous les au moins deux sous-flux et que les paquets de données envoyés à l'aide de tous les au moins deux sous-flux sont les mêmes.

8. Appareil selon la revendication 7, le module d'envoi étant en outre configuré pour : lorsque l'au moins un paramètre d'état de réseau parmi deux ou plus de la pluralité de sous-flux ne satisfait pas la condition prédéfinie, réaliser une transmission redondante pour les données séparément à l'aide des deux sous-flux ou plus, la transmission redondante signifiant que les paquets de données sont envoyés à l'aide de tous les deux sous-flux ou plus, et que les paquets de données envoyés à l'aide de tous les deux sous-flux ou plus sont les mêmes.

9. Appareil selon l'une quelconque des revendications 7 à 8, le paramètre d'état de réseau comprenant : un débit de transmission en temps réel, une fenêtre de commande d'encombrement, une fenêtre de réception, une quantité de paquets de données transmis, une quantité de paquets de données transmis qui sont sans accusé de réception, un temps de transmission, une variation de retard de transmission, un taux de perte de paquets ou une différence de retard de transmission de liaison entre les au moins deux sous-flux.

10. Appareil selon la revendication 7, lors de la réalisation de la transmission agrégée pour les données à l'aide des au moins deux sous-flux, le module d'envoi étant spécifiquement configuré pour : placer un paquet de données des données dans une file d'attente de cache de données à envoyer d'un des au moins deux sous-flux, dans les au moins deux sous-flux, une quantité de données dans une file d'attente de cache de données à envoyer d'un sous-flux correspondant à un retard de transmission plus élevé étant inférieure à une quantité de données dans une file d'attente de cache de données à envoyer d'un sous-flux correspondant à un retard de transmission plus petit.

11. Dispositif d'alimentation, comprenant : un processeur, un émetteur-récepteur et
une mémoire couplée au processeur et configurée pour stocker une pluralité d'instructions qui, lorsqu'elles sont exécutées, amènent le processeur à réaliser le procédé selon l'une quelconque des revendications 1 à 6.

12. Produit-programme d'ordinateur comprenant des instructions qui, lorsqu'elles sont exécutées par un ordinateur, amènent l'ordinateur à effectuer le procédé selon l'une quelconque des revendications 1 à 6.

13. Support non transitoire lisible par ordinateur stockant des instructions d'ordinateur pour une transmission de données, qui, lorsqu'elles sont exécutées par un ou plusieurs processeurs, amènent le ou les processeurs à réaliser le procédé des revendications 1 à 6.

FIG. 1

FIG. 2

When the at least one network status parameter of at least two subflows satisfies the preset condition, perform aggregated transmission for data packets by using subflows that satisfy the preset condition — S302

S301

Determine that at least one network status parameter of a subflow satisfies a preset condition

When the at least one network status parameter of at least one subflow does not satisfy the preset condition, perform redundant transmission for a data packet by using a subflow that does not satisfy the preset condition — S303

When a sum of transmission rates of at least two subflows used for aggregated transmission is less than or equal to a corresponding threshold, change a transmission mode for the at least two subflows from the aggregated transmission to redundant transmission — S304

FIG. 3

Set a cache queue of to-be-sent data for each subflow used for aggregated transmission, to cache a data packet allocated to the subflow for sending — S401

Place a to-be-sent data packet in a to-be-sent cache queue of one of a plurality of subflows used for the aggregated transmission, so that a total transmission time from a time point at which the data packet leaves the cache queue of the subflow to a time point at which the data packet arrives at a receive end is consistent with that from a time point at which another data packet leaves a cache queue of another subflow to a time point at which the data packet arrives at the receive end — S402

Sequentially send data packets based on a data packet enqueue sequence according to cache queues of to-be-sent data of the subflows by using the subflows used for the aggregated transmission — S403

FIG. 4

FIG. 5A

FIG. 5B

S601

During data packet scheduling, traverse all subflows, and group the subflows into two sets: a set of subflows in a stable transmission state and a set of subflows in an unstable transmission state

S602

Determine whether a quantity of subflows in the stable subflow set is greater than or equal to 2

S603

Perform aggregated transmission by using the subflows in the set of subflows in a stable transmission state, and perform redundant transmission by using the subflows in the unstable subflow set

S604

Perform redundant transmission by using all the subflows

FIG. 6

S701

During data packet scheduling, traverse all subflows, and group the subflows into two sets: a set of subflows in a stable transmission state and a set of subflows in an unstable transmission state

S702

Determine whether all the subflows are grouped into the stable subflow set

S703

Perform aggregated transmission by using all the subflows

S704

Perform redundant transmission by using all the subflows

FIG. 7

800

Monitoring module 801

Sending module 802

FIG. 8

FIG. 9

**EP 3 582 455 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7733913 B1
- US 2016134519 A1